# EUROPEAN PATENT APPLICATION

(11) **EP 4 765 178 A1**
(43) Date of publication of application: **24.06.2026**
(21) Application number: 23953031.4
(22) Date of filing: 20.09.2023
(51) Int. Cl.: H01G 4/30

(54) **MULTILAYER CERAMIC CAPACITOR**

(71) Applicant: Murata Manufacturing Co., Ltd., Nagaokakyo-shi, Kyoto 617-8555 (JP)
(72) Inventor: SUGITA, Hiroaki, Nagaokakyo-shi, Kyoto 617-8555 (JP)
(74) Representative: Stöckeler, Ferdinand
(86) International application number: PCT/JP2023/034157
(87) International publication number: WO 2025/062543

(57) **Abstract**

Provided is a multilayer ceramic capacitor capable of improving resistance to electrostrictive strain when a high electric field is applied. A multilayer ceramic capacitor according to the present invention includes: a laminate including a plurality of laminated dielectric layers and having a first main surface and a second main surface which face each other in the lamination direction of the plurality of dielectric layers, a first side surface and a second side surface which face each other in a width direction orthogonal to the lamination direction, and a first end surface and a second end surface which face each other in a length direction orthogonal to the lamination direction and the width direction; a first internal electrode layer disposed on the plurality of dielectric layers and exposed to the first end surface; a second internal electrode layer disposed on the plurality of dielectric layers and exposed to the second end surface; a first external electrode having a base electrode layer, which is disposed on the first end surface, and a plating layer, which is disposed on the base electrode layer; and a second external electrode having a base electrode layer, which is disposed on the second end surface, and a plating layer, which is disposed on the base electrode layer. The crystallites in dielectric particles contained in the dielectric layer are oriented along a C-axis.

## Description

### TECHNICAL FIELD

The present invention relates to a multilayer ceramic capacitor.

### BACKGROUND ART

Conventionally, multilayer ceramic capacitors have been known. Typically, a multilayer ceramic capacitor includes a sintered ceramic body composed of a dielectric ceramic such as barium titanate (BaTiO₃) or the like. The sintered ceramic body includes therein a plurality of internal electrodes placed over each other with a dielectric layer interposed therebetween. The sintered ceramic body has external electrodes formed on opposite end surfaces thereof and electrically connected to the internal electrodes (for example, Patent Document 1).

### Citation List

### Patent Documents

Patent Document 1: Japanese Unexamined Patent Application, Publication No. H8-306580

### DISCLOSURE OF THE INVENTION

### Problems to be Solved by the Invention

However, the multilayer ceramic capacitor with the typical configuration disclosed in Patent Document 1 has the following disadvantage. When a high electric field is applied to the multilayer ceramic capacitor, the dielectric particles contained in the dielectric layers are significantly displaced in the application direction of the electric field (the direction of a C-axis), which may lead to generation of electrostriction and cause a failure.

Therefore, a main object of the present invention is to provide a multilayer ceramic capacitor capable of improving in resistance to electrostriction that occurs when a high electric field is applied.

### Means for Solving the Problems

A multilayer ceramic capacitor according to the present invention includes: a multilayer body including a plurality of dielectric layers that are laminated, the multilayer body having a first main surface and a second main surface opposed to each other in a lamination direction of the plurality of dielectric layers, a first side surface and a second side surface opposed to each other in a width direction orthogonal to the lamination direction, and a first end surface and a second end surface opposed to each other in a length direction orthogonal to the lamination direction and the width direction; first internal electrode layers respectively disposed on the plurality of dielectric layers and exposed at the first end surface; second internal electrode layers respectively disposed on the plurality of dielectric layers and exposed at the second end surface; a first external electrode including a base electrode layer disposed on the first end surface, and a plating layer disposed on the base electrode layer on the first end surface; and a second external electrode including a base electrode layer disposed on the second end surface, and a plating layer disposed on the base electrode layer on the second end surface. Orientation of crystallites in dielectric particles contained in the plurality of dielectric layers is oriented along a C-axis.

The multilayer ceramic capacitor according to the present invention, in which the orientation of the crystallites in the dielectric particles contained in the dielectric layers is oriented along the C-axis, reduces an amount of displacement of the dielectric layers when a high electric field is applied to the multilayer body, whereby the multilayer ceramic capacitor can improve in resistance to electrostriction.

### Effects of the Invention

The present invention allows a multilayer ceramic capacitor to improve in resistance to electrostriction that occurs when a high electric field is applied.

The aforementioned object of the present invention, other objects thereof, features thereof, and advantages thereof will become clearer from the description of embodiments of the invention provided below with reference to the drawings.

### BRIEF DESCRIPTION OF THE DRAWINGS

FIG. 1 is an external perspective view illustrating an example of a multilayer ceramic capacitor according to an embodiment of the present invention;
FIG. 2 is a front view illustrating an example of a multilayer ceramic capacitor according to the embodiment of the present invention;
FIG. 3 is a plan view illustrating an example of a multilayer ceramic capacitor according to the embodiment of the present invention;
FIG. 4 is a schematic cross-sectional view taken along line IV-IV in FIG. 1;
FIG. 5 is a schematic cross-sectional view taken along line V-V in FIG. 1;
FIG. 6 is a schematic cross-sectional view taken along line VI-VI in FIG. 4;
FIG. 7A is a cross-sectional view taken along line II-II in FIG. 1, illustrating a structure in which a counter electrode portion of an internal electrode layer of a multilayer ceramic capacitor according to an embodiment of the present invention is divided into two;
FIG. 7B is a cross-sectional view taken along line II-II in FIG. 1, illustrating a structure in which a counter electrode portion of an internal electrode layer of a multilayer ceramic capacitor according to an embodiment of the present invention is divided into three; and
FIG. 7C is a cross-sectional view taken along line II-II in FIG. 1, illustrating a structure in which a counter electrode portion of an internal electrode layer of a multilayer ceramic capacitor according to the present invention is divided into four.

### PREFERRED MODE FOR CARRYING OUT THE INVENTION

The following describes one example of a multilayer ceramic capacitor according to an embodiment of the present invention.

### 1. Multilayer Ceramic Capacitor

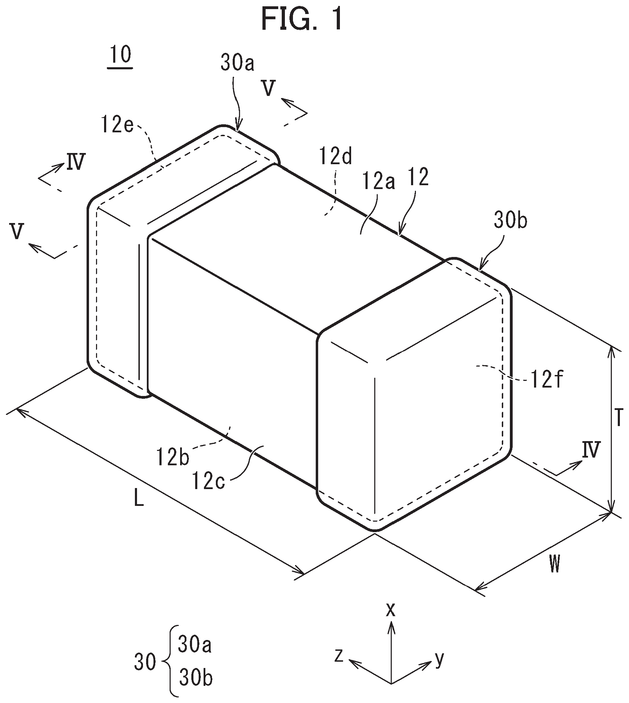

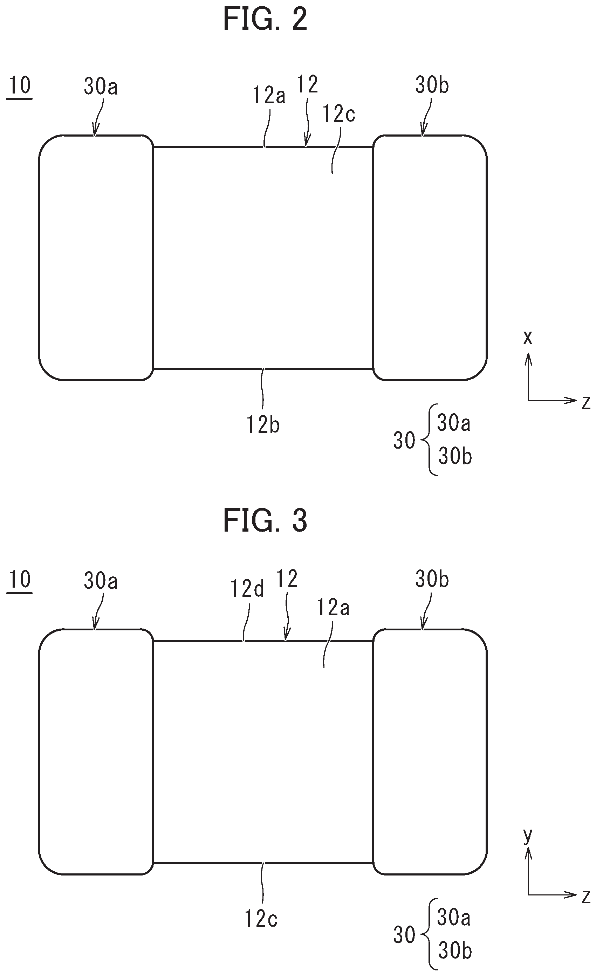

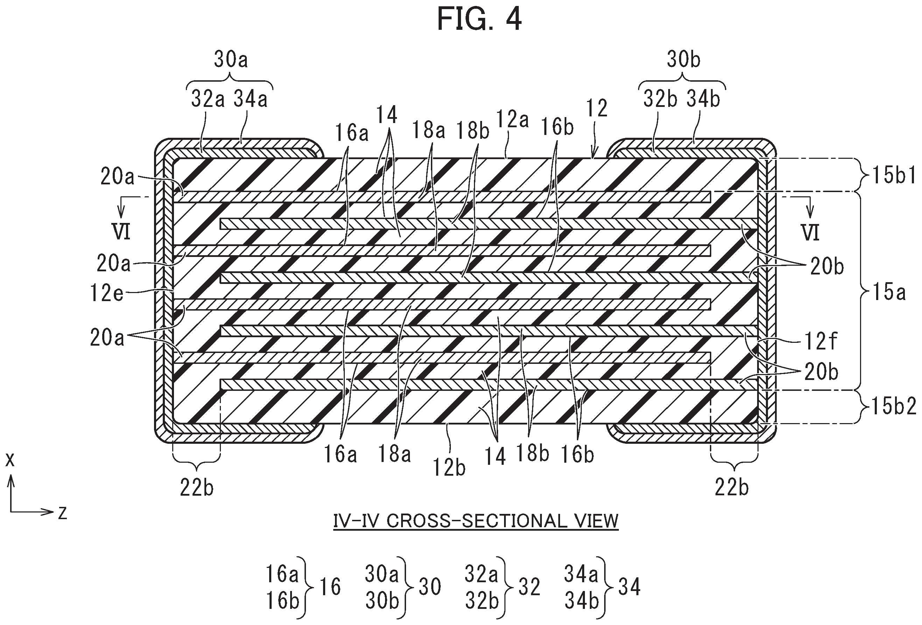

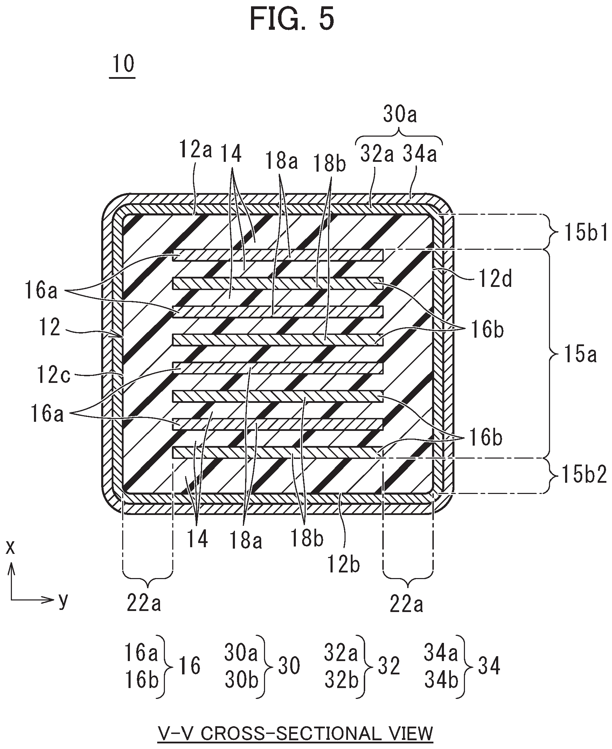

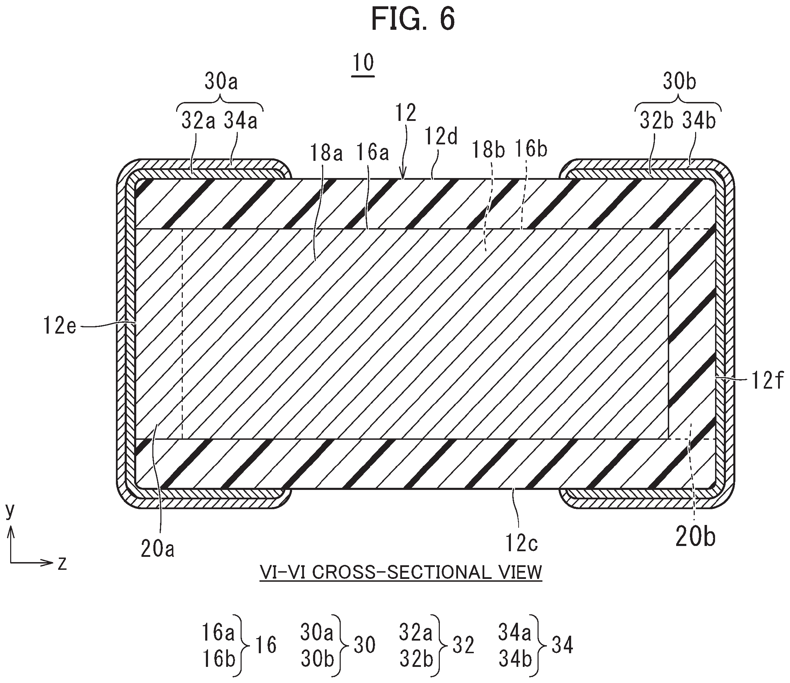

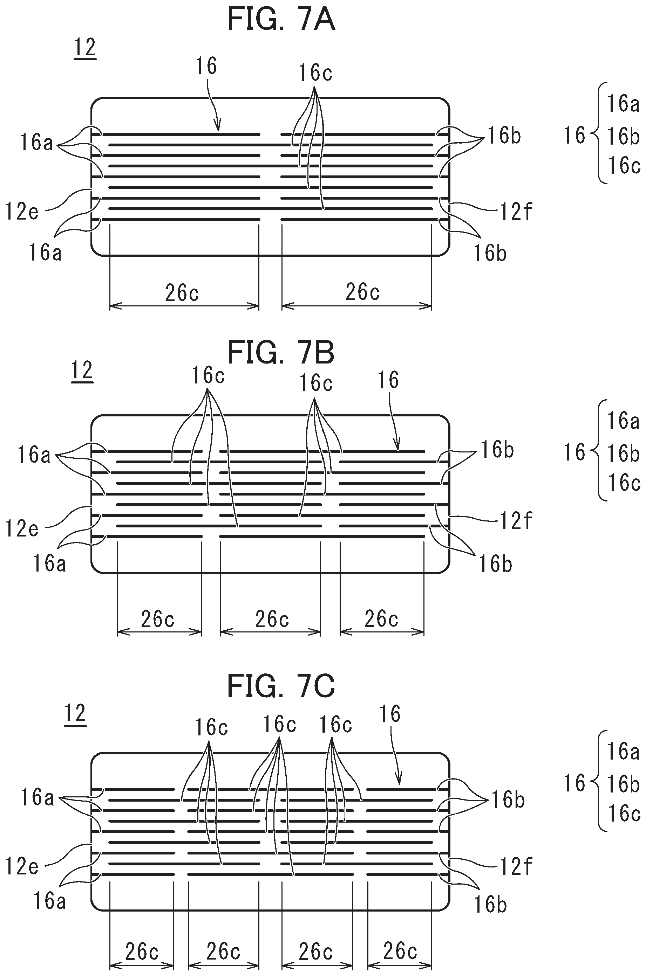

One example of a multilayer ceramic capacitor according to an embodiment of the present invention will be described. FIG. 1 is an external perspective view illustrating the one example of the multilayer ceramic capacitor according to the embodiment of the present invention. FIG. 2 is a front view illustrating the one example of the multilayer ceramic capacitor according to the embodiment of the present invention. FIG. 3 is a plan view illustrating the one example of the multilayer ceramic capacitor according to the embodiment of the present invention. FIG. 4 is a schematic cross-sectional view taken along line IV-IV in FIG. 1. FIG. 5 is a schematic cross-sectional view taken along line V-V in FIG. 1. FIG. 6 is a schematic cross-sectional view taken along line VI-VI in FIG. 4. FIG. 7A, 7B, and 7C are a schematic cross-sectional views taken along line VII-VII in FIG. 1.

The multilayer ceramic capacitor 10 includes a multilayer body 12 and external electrodes 30. The multilayer body 12 is composed of an inner layer portion 15a in which a plurality of dielectric layers 14 and a plurality of internal electrode layers 16 are alternately laminated and which develops capacitance, and a first outer layer portion 15b1 and a second outer layer portion 15b2 which are respectively disposed adjacent to an upper main surface and a lower main surface so as to sandwich the inner layer portion 15a therebetween.

Hereinafter, the multilayer body 12, the internal electrode layers 16, and the external electrodes 30 will be described in this order.

### (Multilayer Body)

The multilayer body 12 includes a plurality of laminated dielectric layers 14 and a plurality of laminated internal electrode layers 16. Further, the multilayer body 12 has a first main surface 12a and a second main surface 12b opposed to each other in a height direction x that is a lamination direction of the plurality of dielectric layers 14, a first side surface 12c and a second side surface 12d opposed to each other in a width direction y orthogonal to the height direction x, and a first end surface 12e and a second end surface 12f opposed to each other in a length direction z orthogonal to the height direction x and the width direction y. The length direction z is also defined as an L direction that connects the first end surface 12e and the second end surface 12f. The width direction y is also defined as a W direction that connects the first side surface 12c and the second side surface 12d. The height direction x is also defined as a T direction that connects the first main surface 12a and the second main surface 12b.

The multilayer body 12 has a rectangular parallelepiped shape. The term "rectangular parallelepiped shape" encompasses a rectangular parallelepiped having rounded corners and ridges. The corner is a portion where three adjacent surfaces of the multilayer body 12 meet each other, and the ridge is a portion where two adjacent surfaces of the multilayer body 12 meet each other. That is, a member having a "rectangular parallelepiped shape" refers to a general member having a first main surface 12a, a second main surface 12b, a first side surface 12c, a second side surface 12d, a first end surface 12e, and a second end surface 12f.

The first main surface 12a and the second main surface 12b, the first side surface 12c and the second side surface 12d, and the first end surface 12e and the second end surface 12f may have projections and depressions or the like formed in a portion or the entirety thereof.

As illustrated in FIGS. 4 and 5, the multilayer body 12 includes: the inner layer portion 15a in which the plurality of internal electrode layers 16 face each other in the height direction x, which connects the first main surface 12a and the second main surface 12b; the first outer layer portion 15b1 composed of two or more dielectric layers 14 sandwiched between the first main surface 12a and the internal electrode layer 16 closest to the first main surface 12a; and the second outer layer portion 15b2 composed of two or more dielectric layers 14 sandwiched between the second main surface 12b the internal electrode layer 16 closest to the second main surface 12b.

The first outer layer portion 15b1 is adjacent to the first main surface 12a of the multilayer body 12 and is an aggregate of two or more dielectric layers 14 sandwiched between the first main surface 12a and the internal electrode layer 16 closest to the first main surface 12a.

The second outer layer portion 15b2 is adjacent to the second main surface 12b of the multilayer body 12 and is an aggregate of two or more dielectric layers 14 sandwiched between the second main surface 12b and the internal electrode layer 16 closest to the second main surface 12b.

The inner layer portion 15a is a region sandwiched between the first outer layer portion 15b1 and the second outer layer portion 15b2.

The number of the laminated dielectric layers 14 is not particularly limited, but is preferably 50 or more and 2000 or less including the first outer layer portion 15b1 and the second outer layer portion 15b2. The thickness of each dielectric layer 14 is preferably about 0.5 µm or more and about 10 µm or less, for example.

A ceramic material constituting the dielectric layers 14 may be a dielectric material, for example. In particular, a dielectric ceramic containing barium titanate (BaTiO₃) as a main component is preferably used as the dielectric material in the present embodiment. In addition, in accordance with desired characteristics of the multilayer body, for example, a subcomponent such as a Mn compound, a Fe compound, a Cr compound, a Co compound, or a Ni compound, may be added at lower content than the main component.

In the present embodiment, the crystallites in dielectric particles contained in the dielectric layers 14 are oriented along a C-axis.

Specifically, in a state in which a high electric field is applied, the dielectric particles contained in the dielectric layers 14 are displaced in the application direction of the electric field (the direction of the C-axis), whereby electrostriction is caused. On the other hand, in the case where the orientation of the crystallites in the dielectric particles is oriented along the C-axis in advance as described above, when a high electric field is applied to the multilayer ceramic capacitor 10, the amount in which the dielectric particles contained in the dielectric layers 14 are displaced in the application direction of the electric field (the direction of the C-axis) is reduced. Therefore, the multilayer ceramic capacitor 10 improves in resistance to electrostriction.

A degree of orientation along the C-axis (degree of C-axis orientation) of the orientation of the crystallites in the dielectric particles contained in the dielectric layers 14 is preferably 1.6 or more and 2.2 or less.

This allows the multilayer ceramic capacitor 10 to further improve in resistance to electrostriction.

The degree of C-axis orientation can be determined based on diffraction intensity measurement by way of transmission XRD in SPring-8. Specifically, from the peak intensities of the plane directions (400) and (040) obtained by Rietveld analysis and the data recorded in the ICDD cards, a relative intensity ratio is calculated and determined as an actual intensity ratio. Then, the ratio between the actual intensity ratio and the theoretical intensity ratio of the plane directions (400) and (040) of BaTiO₃ is calculated and defined as the degree of C-axis orientation.

The theoretical intensity ratio of the plane directions (400) and (040) of BaTiO₃ is 2:1. Therefore, when the actual intensity ratio is 2:1, which is the same as the theoretical intensity ratio, the degree of C-axis orientation is 1, indicating that the crystallites in the dielectric particles are not oriented. On the other hand, when the intensity of the plane direction (400) of BaTiO₃ is greater than 2 relative to the intensity of the plane direction (040) defined as 1, the degree of C-axis orientation is greater than 1, indicating that the crystallites are oriented.

Furthermore, in the present embodiment, the relative permittivity of the dielectric particles is preferably 1000 or more.

The reason is as follows. In the case where the relative permittivity of the dielectric particles is 1000 or more, the dielectric particles in the dielectric layers 14 are displaced in a large amount in response to application of a voltage. Therefore, in consideration of the amount of displacement of the dielectric particles, the configuration in which the dielectric particles are oriented along the C-axis in advance as in the present embodiment is adopted, thereby making it possible to achieve a more remarkable effect of reducing the amount of displacement of the dielectric layers 14 at the time of application of a voltage to the multilayer ceramic capacitor 10.

### (Internal Electrode Layer)

As illustrated in FIGS. 4 and 5, the internal electrode layers 16 include first internal electrode layers 16a and second internal electrode layers 16b. The first internal electrode layers 16a and the second internal electrode layers 16b are alternately laminated with the dielectric layers 14 interposed therebetween.

Each first internal electrode layer 16a is disposed on a surface of the corresponding dielectric layer 14. Each first internal electrode layer 16a includes a first counter electrode portion 18a facing the second internal electrode layer 16b, and a first extension electrode portion 20a disposed in one end portion of the first internal electrode layer 16a and extending from the first counter electrode portion 18a to reach the first end surface 12e of the multilayer body 12. The first extension electrode portion 20a has an end extended toward the first end surface 12e to be exposed. Specifically, the end of the first extension electrode portion 20a is located slightly inwardly with respect to the second end surface 12f.

Although the first counter electrode portion 18a of each first internal electrode layer 16a may have any shape without particular limitation, it preferably has a rectangular shape in plan view. Nevertheless, the first counter electrode portion 18a may have a shape with rounded corner portions in plan view or a shape with oblique corner portions (tapered shape) in plan view.

Although the first extension electrode portion 20a of each first internal electrode layer 16a may have any shape without particular limitation, it preferably has a rectangular shape in plan view. Nevertheless, the first extension electrode portion 20a may have a shape with rounded corner portions in plan view or a shape with oblique corner portions (tapered shape) in plan view. Alternatively, it may have a tapered shape that is inclined as approaching either side in plan view.

Each second internal electrode layer 16b is disposed on a surface of the corresponding dielectric layer 14 that is different from the surface on which the first internal electrode layer 16a is disposed. Each second internal electrode layer 16b includes a second counter electrode portion 18b facing the first internal electrode layer 16a, and a second extension electrode portion 20b disposed in one end portion of the second internal electrode layer 16b and extending from the second counter electrode portion 18b to reach the second end surface 12f of the multilayer body 12. The second extension electrode portion 20b has an end extended toward the second end surface 12f to be exposed. Specifically, the end of the second extension electrode portion 20b is located slightly inwardly with respect to the first end surface 12e.

Although the second counter electrode portion 18b of each second internal electrode layer 16b may have any shape without particular limitation, it preferably has a rectangular shape in plan view. Nevertheless, the second counter electrode portion 18b may have a shape with rounded corner portions in plan view or a shape with oblique corner portions (tapered shape) in plan view.

Although the second extension electrode portion 20b of each second internal electrode layer 16b may have any shape without particular limitation, it preferably has a rectangular shape in plan view. Nevertheless, the second extension electrode portion 20b may have a shape with rounded corner portions in plan view or a shape with oblique corner portions (tapered shape) in plan view. Alternatively, it may have a tapered shape that is inclined as approaching either side in plan view.

The multilayer body 12 includes side portions 22a (hereinafter each may be referred to as a "W gap"). One of the side portions 22a is formed between the first side surface 12c and one end in the width direction y of each first counter electrode portion 18a and between the first side surface 12c and one end in the width direction y of each second counter electrode portion 18b, and the other of the side portions 22a is formed between the second side surface 12d and the other end in the width direction y of each first counter electrode portion 18a and between the second side surface 12d and the other end in the width direction y of each second counter electrode portion 18b. The multilayer body 12 further includes end portions 22b (hereinafter each may be referred to as an "L gap"). One of the end portions 22b is formed between the second end surface 12f and the end of each first internal electrode layer 16a opposite to the first extension electrode portion 20a, and the other of the end portions 22b is formed between the first end surface 12e and the end of each second internal electrode layer 16b opposite to the second extension electrode portion 20b.

The number of laminated internal electrode layers 16 is not particularly limited, but is preferably 50 or more and 2000 or less. The thickness of each internal electrode layer 16 is preferably about 0.2 µm or more and about 2.0 µm or less.

The internal electrode layers 16 can be composed of, for example, an appropriate conductive material, examples of which include metals such as Ni, Cu, Ag, Pd, and Au, and an alloy containing at least one of these metals such as a Ag-Pd alloy.

Referring to FIG. 7, the multilayer body 12 illustrated in FIG. 1 may have a structure in which floating internal electrode layers 16c that are not extended toward either the first end surface 12e or the second end surface 12f are arranged in addition to the first internal electrode layers 16a and the second internal electrode layers 16b, and in which a counter electrode portion 26c is divided into two or more segments due to the floating internal electrode layers 16c. For example, the multilayer body may have a two-segment structure illustrated in FIG. 7A, a three-segment structure illustrated in FIG. 7B, or a four-segment structure illustrated in FIG. 7C, and it goes without saying that it may have a four or more-segment structure. By adopting the structure in which the counter electrode portion 26c is divided into two or more segments, a plurality of capacitor components are formed between the first internal electrode layers 16a, the second internal electrode layers 16b, and the floating internal electrode layers 16c that face each other, and these capacitor components are connected in series. As a result, a low voltage is applied to each of the capacitor components, thereby allowing the multilayer ceramic capacitor 10 to have a high breakdown voltage.

Similarly to the first internal electrode layers 16a and the second internal electrode layers 16b, the floating internal electrode layers 16c can be composed of, for example, an appropriate conductive material, examples of which include metals such as Ni, Cu, Ag, Pd and Au, and an alloy containing at least one of these metals such as a Ag-Pd alloy.

As illustrated in FIGS. 1 to 3, the external electrodes 30 are disposed on and around the first end surface 12e and the second end surface 12f of the multilayer body 12.

Each external electrode 30 includes a base electrode layer 32 containing a metal component and glass, and a plating layer 34 disposed on a surface of the base electrode layer 32.

The external electrodes 30 include a first external electrode 30a and a second external electrode 30b.

The first external electrode 30a is connected to the first internal electrode layers 16a and is disposed on at least the surface of the first end surface 12e. The first external electrode 30a extends from the first end surface 12e of the multilayer body 12 to be also disposed on a portion of the first main surface 12a, a portion of the second main surface 12b, a portion of the first side surface 12c, and a portion of the second side surface 12d. In this case, the first external electrode 30a is electrically connected to the first extension electrode portions 20a of the first internal electrode layers 16a.

The second external electrode 30b is connected to the second internal electrode layers 16b and is disposed on at least the surface of the second end surface 12f. The second external electrode 30b extends from the second end surface 12f of the multilayer body 12 to be also disposed on a portion of the first main surface 12a, a portion of the second main surface 12b, a portion of the first side surface 12c, and a portion of the second side surface 12d. In this case, the second external electrode 30b is electrically connected to the second extension electrode portions 20b of the second internal electrode layers 16b.

In the multilayer body 12, the first counter electrode portions 18a of the first internal electrode layers 16a and the second counter electrode portions 18b of the second internal electrode layers 16b face each other with the dielectric layers 14 interposed therebetween, thereby producing capacitance. As a result, capacitance can be obtained between the first external electrode 30a to which the first internal electrode layers 16a are connected and the second external electrode 30b to which the second internal electrode layers 16b are connected, whereby the characteristics of the capacitor are developed.

The base electrode layer 32 includes a first base electrode layer 32a and a second base electrode layer 32b.

The first base electrode layer 32a is connected to the first internal electrode layers 16a and is disposed on the surface of the first end surface 12e. The first base electrode layer 32a extends from the first end surface 12e to be also disposed on a portion of the first main surface 12a, a portion of the second main surface 12b, a portion of the first side surface 12c, and a portion of the second side surface 12d. In this case, the first base electrode layer 32a is electrically connected to the first extension electrode portions 20a of the first internal electrode layers 16a.

The second base electrode layer 32b is connected to the second internal electrode layers 16b and is disposed on the surface of the second end surface 12f. The second base electrode layer 32b extends from the second end surface 12f to be also disposed on a portion of the first main surface 12a, a portion of the second main surface 12b, a portion of the first side surface 12c, and a portion of the second side surface 12d. In this case, the second base electrode layer 32b is electrically connected to the second extension electrode portions 20b of the second internal electrode layers 16b.

The base electrode layer 32 includes at least one selected from a baked layer, a conductive resin layer, a thin film layer, or the like.

The following describes a case where the base electrode layer 32 is the above-mentioned baked layer, a case where the base electrode layer 32 is the above-mentioned conductive resin layer, and a case where the base electrode layer 32 is the above-mentioned thin film layer.

### (In the Case of Baked Layer)

The baked layer includes a metal component and glass. The metal component of the baked layer includes, for example, at least one selected from Cu, Ni, Ag, Pd, a Ag-Pd alloy, Au, or the like. The baked layer is formed by baking a conductive paste containing glass and the metal and applied to the multilayer body. The baked layer is formed by way of firing a multilayer chip including the internal electrode layers 16 and the dielectric layers 14 concurrently with the conductive paste applied to the multilayer chip. However, the baked layer may be formed by way of baking after the firing of the multilayer chip including the internal electrode layers 16 and the dielectric layers 14. The baked layer may include a plurality of layers.

Preferably, the first base electrode layer 32a on the first end surface 12e has, in its central portion in the height direction x, a thickness of, for example, about 10 µm or greater and about 150 µm or less in the length direction z connecting the first end surface 12e and the second end surface 12f.

Preferably, the second base electrode layer 32b on the second end surface 12f has, in its central portion in the height direction x, a thickness of, for example, about 10 µm or greater and about 150 µm or less in the length direction z connecting the first end surface 12e and the second end surface 12f.

Preferably, the first base electrode layer 32a on a portion of the first main surface 12a and a portion of the second main surface 12b has, in its central portion in the length direction z connecting the first end surface 12e and the second end surface 12f, a thickness of, for example, about 10 µm or greater and about 100 µm or less in the height direction x connecting the first main surface 12a and the second main surface 12b.

Preferably, the second base electrode layer 32b on a portion of the first main surface 12a and a portion of the second main surface 12b has, in its central portion in the length direction z connecting the first end surface 12e and the second end surface 12f, a thickness of, for example, about 10 µm or greater and about 100 µm or less in the height direction x connecting the first main surface 12a and the second main surface 12b.

Preferably, the first base electrode layer 32a on a portion of the first side surface 12c and a portion of the second side surface 12d has, in its central portion in the length direction z connecting the first end surface 12e and the second end surface 12f, a thickness of, for example, about 10 µm or greater and about 100 µm or less in the width direction y connecting the first side surface 12c and the second side surface 12d.

Preferably, the second base electrode layer 32b on a portion of the first side surface 12c and a portion of the second side surface 12d has, in its central portion in the length direction z connecting the first end surface 12e and the second end surface 12f, a thickness of, for example, about 10 µm or greater and about 100 µm or less in the width direction y connecting the first side surface 12c and the second side surface 12d.

### (In the Case of Conductive Resin Layer)

The conductive resin layer includes a first conductive resin layer and a second conductive resin layer.

Preferably, the first conductive resin layer is provided as the first base electrode layer 32a and covers another layer such as a baked layer. Preferably, the second conductive resin layer is provided as the second base electrode layer 32b and covers another layer such as a baked layer.

Specifically, it is preferable that the first conductive resin layer as the first base electrode layer 32a and the second conductive resin layer as the second base electrode layer 32b are respectively disposed on the other layers such as the baked layers respectively formed on the first end surface 12e and the second end surface 12f, and further extend over portions of the other layers such as the baked layers disposed on the first main surface 12a, the second main surface 12b, the first side surface 12c, and the second side surface 12d. Nevertheless, the first conductive resin layer and the second conductive resin layer may be disposed only on the other layers such as the baked layers on the first end surface 12e and the second end surface 12f.

Each of the first conductive resin layer and the second conductive resin layer preferably has a thickness of, for example, about 10 µm or greater and about 200 µm or less.

Each of the first conductive resin layer and the second conductive resin layer contains a thermosetting resin and a metal component.

Due to including the thermosetting resin, the first conductive resin layer and the second conductive resin layer are more flexible than the base electrode layer 32 that is composed of, for example, a plated film or a fired product of a conductive paste. For this reason, the conductive resin layers function as buffer layers, making it possible to prevent cracks from forming in the multilayer ceramic capacitor 10 even when a physical impact or an impact due to a thermal cycle is applied to the multilayer ceramic capacitor 10.

Specific examples of the thermosetting resin include various known thermosetting resins such as an epoxy resin, a phenol resin, a urethane resin, a silicone resin, a polyimide resin, and the like. Among them, the epoxy resin excellent in heat resistance, moisture resistance, adhesion, etc. is one of the most suitable resins.

The first conductive resin layer and the second conductive resin layer preferably contain a curing agent together with the thermosetting resin. In a case of using an epoxy resin as the base resin, various known compounds such as a phenol-based compound, an amine-based compound, an acid anhydride-based compound, an imidazole-based compound, and the like can be used as the curing agent for the epoxy resin.

As the metal contained in the first conductive resin layer and the second conductive resin layer, Ag, Cu, or an alloy thereof can be used. Alternatively, a metal powder having a surface coated with Ag can be used. Preferably, a Ag-coated Cu or Ni powder is used as the metal powder.

Alternatively, Cu subjected to an antioxidant treatment can be used. The reason for using the Ag-coated metal is that an inexpensive metal can be employed as the base material while the above-described characteristics of Ag are maintained.

The first conductive resin layer and the second conductive resin layer preferably contain the metal in an amount of 35 vol% or more and 75 vol% or less with respect to the total volume of the conductive resin.

The metal contained in the first conductive resin layer and the second conductive resin layer may have any shape without particular limitation. The conductive filler may have a spherical shape, a flat shape, or the like.

The metal contained in the first conductive resin layer and the second conductive resin layer may have any average particle diameter without particular limitation. The conductive filler may have an average particle diameter of, for example, about 0.3 µm or greater and about 10 µm or less.

The metal contained in the first conductive resin layer and the second conductive resin layer is mainly responsible for the electrical conductivity of the conductive resin layers. Specifically, the conductive filler particles in contact with each other form conduction paths in the conductive resin layers.

The metal contained in the first conductive resin layer and the second conductive resin layer may have a spherical shape, a flat shape, or the like, but it is preferable to use a mixture of a spherical metal powder and a flat metal powder.

The conductive resin layers may be formed directly on the multilayer body without forming the baked layers.

### (In the Case of Thin Film Layer)

In the case where the base electrode layer 32 is formed as a thin film layer, the thin film layer is formed by a thin film forming method such as sputtering or a vapor deposition. The thin film layer is composed of deposited metal particles and has a thickness of 10 µm or less.

Next, the plating layer 34 disposed on the base electrode layer 32 will be described with reference to FIGS. 2 and 3. The plating layer 34 includes a first plating layer 34a and a second plating layer 34b.

The first plating layer 34a and the second plating layer 34b include, for example, at least one selected from Cu, Ni, Sn, Ag, Pd, a Ag-Pd alloy, Au, or the like.

The first plating layer 34a is disposed so as to completely cover the first base electrode layer 32a. The second plating layer 34b is disposed so as to completely cover the second base electrode layer 32b.

Each of the first plating layer 34a and the second plating layer 34b may be composed of a plurality of layers. In this case, each plating layer 34 preferably has a two-layer structure including a lower plating layer (Ni plating layer) constituted of Ni plating provided on the base electrode layer 32 and an upper plating layer (Sn plating layer) constituted of Sn plating provided on the lower plating layer. In other words, in this case, the first plating layer 34a includes a first lower plating layer and a first upper plating layer disposed on a surface of the first lower plating layer. Likewise, the second plating layer 34b includes a second lower plating layer and a second upper plating layer disposed on a surface of the second lower plating layer.

Each lower plating layer constituted of Ni plating is provided in order to prevent the base electrode layer 32 from being eroded by solder when the multilayer ceramic capacitor 10 is mounted, and each upper plating layer constituted of Sn plating is provided in order to facilitate the mounting of the multilayer ceramic capacitor 10 by improving solder wettability when the multilayer ceramic capacitor 10 is mounted.

Preferably, each of the lower plating layer and the upper plating layer has a thickness of 1.0 µm or greater and 15.0 µm or less.

The dimension in the length direction z of the multilayer ceramic capacitor 10 including the multilayer body 12, the first external electrode 30a, and the second external electrode 30b is defined as a dimension L, the dimension in the height direction x of the multilayer ceramic capacitor 10 including the multilayer body 12, the first external electrode 30a, and the second external electrode 30b is defined as a dimension T, and the dimension in the width direction y of the multilayer ceramic capacitor 10 including the multilayer body 12, the first external electrode 30a, and the second external electrode 30b is defined as a dimension W. The multilayer ceramic capacitor 10 is designed such that the dimension L in the length direction z is 0.2 mm or greater and 10.0 mm or less, the dimension W in the width direction y is 0.1 mm or greater and 10.0 mm or less, and the dimension T in the height direction x is 0.1 mm or greater and 5.0 mm or less. The dimensions of the multilayer ceramic capacitor 10 can be measured using a microscope.

In the multilayer ceramic capacitor 10 according to the embodiment illustrated in FIG. 1, the orientation of the crystallites in the dielectric particles contained in the dielectric layers 14 of the multilayer body 12 are oriented along the C-axis. Due to this configuration, when a high electric field is applied to the multilayer ceramic capacitor 10, the amount in which the dielectric particles contained in the dielectric layers 14 are displaced in the application direction of the electric field (the direction of the C-axis) is reduced, whereby resistance to electrostriction can be improved.

In the multilayer ceramic capacitor 10, the degree of orientation along the C-axis (degree of C-axis orientation) of the orientation of the crystallites in the dielectric particles contained in the dielectric layers 14 is preferably 1.6 or more and 2.2 or less. This configuration allows the multilayer ceramic capacitor 10 to further improve in resistance to electrostriction.

Furthermore, in the multilayer ceramic capacitor 10, the relative permittivity of the dielectric particles is preferably 1000 or more. This makes it possible to achieve a more remarkable effect of reducing the amount of displacement of the dielectric layers 14 at the time of application of a voltage to the multilayer ceramic capacitor 10.

### 2. Method of Manufacturing Multilayer Ceramic Capacitor

Next, a method of manufacturing the multilayer ceramic capacitor will be described.

(1) Dielectric sheets and an internal electrode layer-forming conductive paste are prepared. The dielectric sheets and the internal electrode layer-forming conductive paste contain a binder (e.g., a known organic binder) and a solvent (e.g., a known organic binder).
(2) Next, the internal electrode layer-forming conductive paste is printed in a predetermined pattern on the dielectric sheets by, for example, screen printing or gravure printing, thereby preparing the dielectric sheets having thereon a first internal electrode pattern corresponding to the first internal electrode layer and the dielectric sheets having thereon a second internal electrode pattern corresponding to the second internal electrode layer. Additionally, dielectric sheets devoid of printed internal electrode pattern are also prepared as outer layer-forming dielectric sheets.
(3) A predetermined number of outer layer-forming dielectric sheets devoid of printed internal electrode pattern are laminated together to form a portion to become the second outer layer portion, and the dielectric sheets having thereon the first internal electrode pattern and the dielectric sheets having thereon the second internal electrode pattern are sequentially laminated to form a portion to become the inner layer portion.
(4) A predetermined number of dielectric sheets devoid of printed internal electrode pattern are further laminated on the internal electrode pattern corresponding to the internal electrode layer on the outermost surface of the inner layer portion, thereby forming a portion to become the first outer layer portion. In this way, a multilayer sheet is produced.
(5) The multilayer sheet is pressed in the lamination direction by means of isostatic pressing or the like to produce a multilayer block.
(6) The multilayer block is cut into a predetermined size, thereby producing multilayer chips. In this step, the corners and ridges of the multilayer chips may be rounded by barrel polishing or the like.
(7) The multilayer chips are fired to produce the multilayer bodies 12. The firing temperature is preferably 900°C or higher and 1400°C or lower, although it depends on the ceramic and the materials of the internal electrode 16 and the internal electrode layers. It is preferable that the firing atmosphere has an oxygen concentration of 1000 ppm or more and 5000 ppm or less, the temperature is raised from 800°C to a top temperature (1400°C) at a rate of 100°C/sec or greater, and the firing time is 4 seconds or longer and 8 seconds or shorter. This process can cause the orientation of the crystallites in the dielectric particles contained in the dielectric layers to be oriented along the C-axis.
(8) Subsequently, the base electrode layers are formed. The base electrode layers are baked layers. A conductive paste containing a glass component and a metal component is prepared for each of the first base electrode layer and the second base electrode layer.
(9) The conductive paste is applied to the first end surface and the second end surface, which are the opposite end surfaces of the multilayer body 12, by a method such as dipping or screen printing, and then baking is performed to form the first base electrode layer and the second base electrode layer. The temperature of the baking in this step is preferably 700°C or higher and 900°C or lower.
(10) In a case where the base electrode layers are conductive resin layers, the conductive resin layers can be formed by the following method. The conductive resin layers may be formed on the surfaces of baked layers, or directly on the multilayer body as a single layer without forming the baked layers.

An example of the method of forming the conductive resin layers includes applying a conductive resin paste containing a thermosetting resin and a metal component to the baked layers or the multilayer body, and performing heat treatment at a temperature of 250°C or higher and 550°C or lower to thermally cure the resin, thereby forming the conductive resin layers. The heat treatment in this step is preferably performed in a N₂ atmosphere. Further, in order to prevent scattering of the resin and oxidation of various metal components, the oxygen concentration is preferably reduced to 100 ppm or less.

An Example of a method of applying the conductive resin paste includes applying the conductive resin paste by extruding the conductive resin paste through a slit or applying the conductive resin paste by roller transfer.

(11) Plating is performed on the surface of the base electrode layer to form a plating layer. In the present embodiment, two plating layers are formed over the surfaces of the first base electrode layer and the second base electrode layer. Specifically, a Ni plating layer is formed on the first base electrode layer and the second base electrode layer, and a Sn plating layer is formed on the Ni plating layer. The Ni plating layer and the Sn plating layer are sequentially formed by barrel plating, for example.

In the above-described manner, the multilayer ceramic capacitor 10 according to the embodiment illustrated in FIG. 1 is manufactured.

### 3. Experimental Examples

Next, in order to ascertain the effects of the multilayer ceramic capacitor according to the present invention described above, multilayer ceramic capacitors as test samples having different degrees of C-axis orientation were produced according to the manufacturing method described above, and experiments were performed on the test samples to check the presence or absence of a crack after an electrostriction test.

### (1) Specifications of the multilayer ceramic capacitors produced as Examples

Multilayer ceramic capacitors as test samples of Examples 1 to 5 were produced by the manufacturing method according to the above-described embodiment.
- Dimensions (design values) of the multilayer ceramic capacitor: L × W × T = 1.19 mm × 0.68 mm × 0.68 mm
- Ceramic material: BaTiO₃
- Capacitance: 10 µF
- Material for the internal electrode layers: Ni
- Structure of the external electrodes: conductive metal (Cu) and glass component
- Plating layer

Two-layer structure including a Ni plating layer and a Sn plating layer
Thickness of the Ni plating layer: about 3 µm
Thickness of the Sn plating layer: about 5 µm

### (2) Specifications of the multilayer ceramic capacitors produced as Comparative Example

Multilayer ceramic capacitors as test samples of a Comparative Example were manufactured by the same process as the manufacturing method according to the above-described embodiment, except for the following. In the process of producing the test samples of the Comparative Example, the step (7) of the manufacturing method was performed at a temperature rise rate of 5°C/min and at a lower oxygen concentration than that of the experimental examples. The rest of the specifications were the same as those of the test samples of the Examples.

### (3) Method of electrostriction test

The electrostriction test of the multilayer ceramic capacitors as the test samples was performed using a breakdown voltage measurement apparatus. Specifically, the breakdown voltage measurement apparatus was set to conditions that the voltage was boosted up to DC 150 V at a boosting rate of 100 V/sec.

### (4) Method of detecting a crack

A crack in the test samples was detected by the following method. First, the multilayer ceramic capacitors as the test samples subjected to the voltage application in the above-described electrostriction test were aligned with the main surfaces facing upward. Next, the upper surfaces of the aligned multilayer ceramic capacitors were irradiated with an ultrasonic wave using an ultrasonic probe so that the multilayer ceramic capacitors were subjected to scanning. The reflected waves of the ultrasonic wave were overserved during the scanning. The presence or absence of a crack was ascertained by detecting a reflected wave returning earlier than a bottom echo. Here, those determined to have a crack were counted as test samples with electrostrictive defects, and a crack generation ratio was calculated. For each of Examples and Comparative Example, 100 test samples were prepared, and the crack generation ratio was determined. The percentage of the number of test samples having a crack with respect to the total number (100) of measured test samples was defined as the crack generation ratio. The criteria for evaluating the crack generation ratio were as follows: a crack generation ratio of 0% or more and 4% or less was determined as "O" (good), a crack generation ratio of 5% or more and 80% or less was determined as "Δ" (fair), and a crack generation ratio of 81% or more and 100% or less was determined as "X" (poor) .

### (5) Method of measuring degree of C-axis orientation

The degree of C-axis orientation of the dielectric particles was determined based on diffraction intensity measurement by way of transmission XRD in SPring-8. Specifically, as described above, from the peak intensities of the plane directions (400) and (040) obtained by Rietveld analysis and the data recorded in the ICDD cards, a relative intensity ratio is calculated and determined as an actual intensity ratio. Then, a ratio of the actual intensity ratio to the theoretical intensity ratio was calculated to determine the degree of C-axis orientation. The criteria for evaluating the degree of C-axis orientation were as follows. When the degree of C-axis orientation was 1, it was determined that the dielectric particles were in random orientation, that is, the C-axes were not oriented. When the degree of C-axis orientation was greater than 1, it was determined that the C-axes were oriented.

### (6) Results

Table 1 shows the degree of C-axis orientation of the dielectric particles, the crack generation ratio, and the evaluation results of the electrostriction test for the multilayer ceramic capacitors as the test samples of Examples 1 to 5 and Comparative Example 1.

**[Table 1]**

| | Degree of C-axis Orientation | Crack Generation Ratio (%) | Comprehensive Evaluation |
|---|---|---|---|
| Example 1 | 1.4 | 5 | △ |
| Example 2 | 1.6 | 0 | ○ |
| Example 3 | 1.8 | 0 | ○ |
| Example 4 | 2.0 | 0 | ○ |
| Example 5 | 2.2 | 0 | ○ |
| Comprative Example | 1.0 | 93 | × |

As shown in Table 1, the test samples of Examples 1 to 5, in which the dielectric particles in the dielectric layers were oriented along the C-axis, achieved good results: the crack generation ratio was 5% or less.

The test samples of Examples 2 to 5, in which the degree of C-axis orientation was 1.6 or more and 2.2 or less, achieved further good results: the crack generation ratio was 0%.

On the other hand, the test samples of Comparative Example, in which the dielectric particles were not oriented along the C-axis (the degree of C-axis orientation was 1), exhibited a crack generation ratio of 93%.

The above-described results suggest that, in the present invention, since the orientation of the crystallites in the dielectric particles contained in the dielectric layers is oriented along the C-axis, the amount of displacement of the dielectric layers when a high electric field is applied to the multilayer body is reduced, and as a result, the multilayer ceramic capacitor can improve in resistance to electrostriction.

It should be noted that the present invention is not limited to the embodiments disclosed in the above description.

In other words, various modifications can be made to the above-described embodiments in terms of the mechanism, the shape, the material, the quantity, the position, the arrangement, and the like without departing from the technical idea and the object of the present invention, and these modifications are encompassed in the scope of the present invention.

### EXPLANATION OF REFERENCE NUMERALS

10 Multilayer ceramic capacitor
12 Multilayer body
12a First main surface
12b Second main surface
12c First side surface
12d Second side surface
12e First end face
12f Second end surface
14 Dielectric layer
15a Inner layer portion
15b1 First outer layer portion
15b2 Second outer layer portion
16 Internal electrode layer
16a First internal electrode layer
16b Second internal electrode layer
16c Floating internal electrode layer
18a First counter electrode portion
18b Second counter electrode portion
20a First extension electrode portion
20b Second extension electrode portion
22a Side portion
22b End portion
26c Counter electrode portion
30 External electrode
30a First external electrode
30b Second external electrode
32 Base electrode layer
32a First base electrode layer
32b Second base electrode layer
34 Plating layer
34a First plating layer
34b Second plating layer
X Height direction (lamination direction)
Y Width direction
Z Length direction

## Claims

1. A multilayer ceramic capacitor, comprising:
a multilayer body including a plurality of dielectric layers that are laminated, the multilayer body having a first main surface and a second main surface opposed to each other in a lamination direction of the plurality of dielectric layers, a first side surface and a second side surface opposed to each other in a width direction orthogonal to the lamination direction, and a first end surface and a second end surface opposed to each other in a length direction orthogonal to the lamination direction and the width direction;
first internal electrode layers respectively disposed on the plurality of dielectric layers and exposed at the first end surface;
second internal electrode layers respectively disposed on the plurality of dielectric layers and exposed at the second end surface;
a first external electrode including a base electrode layer disposed on the first end surface, and a plating layer disposed on the base electrode layer on the first end surface; and
a second external electrode including a base electrode layer disposed on the second end surface, and a plating layer disposed on the base electrode layer on the second end surface, wherein
crystallites in dielectric particles contained in the plurality of dielectric layers are oriented along a C-axis.

2. The multilayer ceramic capacitor according to claim 1, wherein a degree of orientation along the C-axis (degree of C-axis orientation) of the orientation of the crystallites in the dielectric particles contained in the plurality of dielectric layers is 1.6 or more and 2.2 or less.

3. The multilayer ceramic capacitor according to claims 1 or 2, wherein a relative permittivity of the dielectric particles is 1000 or more.
